# EUROPEAN PATENT APPLICATION

(11) **EP 1 241 724 A2**
(43) Date of publication of application: **18.09.2002**
(21) Application number: 02425146.4
(22) Date of filing: 13.03.2002
(51) Int. Cl.: H01M 8/10, H01M 8/02

(54) **'MEGA' component for polymer electrolyte fuel cells and relative manufacturing technology**

(30) Priority: 16.03.2001 IT BO010143
(71) Applicant: Roen Est s.r.l., 40100 Bologna (IT)
(72) Inventor: D'Anzi, Angelo, 40059 Medicina (BO) (IT)
(74) Representative: Trentini, Ermanno, Ing.

(57) **Abstract**

The invention regards the so-called 'MEGA', a component representing an essential part of fuel cells, produced through a forming process whereby the electrodes (3) are embedded in the gasket (2) and which starts from a large assembly that is subsequently split into standard size components.

## Description

The present industrial invention regards the configuration of the 'MEGA' component for polymer electrolyte fuel cells and the technology for producing it. Fuel cells are electrochemical generators which, basically speaking, combine a fuel (typically hydrogen) and an oxidant (oxygen) to produce a continuous electrical current and - as by-products - water and heat.

In the cell (a unit that generates 0.7 volts, composed of a 'MEA', two gaskets and two collectors), the fuel and the oxidising gas are the reagents; on condition that they are supplied continuously, electrical current may be generated indefinitely. In the cell, the fuel and the oxidising gas come into contact with the 'MEA' (membrane electrode assembly), consisting of a membrane and two electrodes, an anode and cathode respectively (on the faces opposite those in contact with the polymer membrane). Given the porosity of the electrodes, the chemical reactions - i.e. oxidation of the fuel and reduction of the oxidising gas - are fed continuously.

In the case of fuel cells, it is of fundamental importance that the effluents (water and waste gas) continuously discharged from the cell do not contain polluting substances.
Individual cells are joined together in a series to obtain the overall voltage desired. The cells thus connected in series form what is called a stack. The invention described herein specifically regards cells employing a polymer membrane, known as PEFC (polymer electrolyte fuel cell). The invention provides a solution for joining the 'MEA' of these cells to the two current collectors, also referred to as current carrier plates.

Electricity is produced using an electrolyte consisting in a sulfonic perfluorinated membrane that is an excellent conductor of protons and through which protons pass from the anode to the cathode. At the same time, the extremely gas-impermeable membrane prevents the two gases from coming into physical contact.
The gases are uniformly distributed over the surface of the 'MEA' as they flow inside the channels provided on the current collectors.
The collectors also have the function of collecting the current that forms on the sides of the 'MEA'.
It is extremely important to prevent gas leakages between the 'MEA' and the plates. Therefore, a gasket is placed between the 'MEA' and the plates; care is taken to avoid contact with the electrodes, since they have a porous surface and would cause gas to leak.

To achieve this purpose the membrane is allowed to overlap at the 4 sides of the assembly; given its non-porous nature, the membrane provides an adequate bonding surface for the gasket.
This approach results in a variety of problems, which are listed below.
1) The difficulty of guaranteeing gas impermeability increases as the number of individual assemblies increases; in fact, two gaskets are required for each 'MEA'. Considering that the number of 'MEA' in a stack may be as high as 400, it may be deduced that as many as 800 gaskets will be used.
2) Since the membrane must be made to overlap the electrode, each 'MEA' is produced individually.
3) Assembling the stack involves no fewer than three operations per cell: first the positioning of the gasket, then the positioning of the 'MEA' and finally the positioning of the second gasket.
4) There is a waste of membrane material, since the area of the membrane that overlaps the electrode serves solely to form a bond with the gasket and is not used for the ionic exchange.
The principal aim of the 'MEGA' component, as conceived in the present invention, is to eliminate such problems by adopting a procedure for "embedding" the MEA in the gasket, which relies on a well-known material injection moulding process.

The device envisioned according to the invention achieves these and other aims. It basically consists of a 'MEA' of large dimensions - e.g. 1 m² - without any overlapping membrane, which is die cut into one hundred 10x10 cm 'MEA'; on the perimeter of each 'MEA', a gasket-forming material will be injected in a specially designed mould so as to create a 'MEGA' (membrane electrode gasket assembly), a single component composed of a membrane, two electrodes and a gasket.
A perfect gas-tight seal is guaranteed by the fact that the gasket-forming material is injected - and not only applied on the surface - and works its way through the porosities of the electrode, thereby making the cell absolutely impermeable. As noted previously, once the moulding operation has been completed, the 'MEGA' will be a single component; hence the three components of the traditional system, i.e. two gaskets and a MEA, will disappear.

Precisely for this reason the number of operations necessary for assembling a stack will be considerably reduced: no longer three operations per individual cell but one only. Considering that, with the conventional technology, assembling a stack made up of 400 'MEA' required 1200 operations, now it will require only 400 operations, the result being an obvious reduction in production times. Furthermore, again using the conventional technology, producing a single 10x10 cm 'MEA' requires "10 time units"; thus to produce 100 assemblies with this technology it would take "1000 time units".
With the 'MEGA' to which the present patent pertains only "12 time units" are required in order to produce 100 assemblies of the same dimensions. In fact, "10 units of time" are necessary to produce a single large membrane electrode assembly and another "2 time units" are needed to obtain one hundred 10x10 cm assemblies by die cutting.
If it is assumed that 1 square metre of proton exchange membrane can develop a power of 3000 watts, comparing the traditional and the present system of production allows the following deductions to be made:
a traditional stack, made up of 100 cells whose 'MEA' have been derived from 1 m² of membrane (considering that the membrane overlaps each side by 1 cm to form a bond with the gasket), will be able to supply a power of 1920 W, since the overlapping part of the membrane bonded with the gasket does not produce electricity.
Conversely, the same stack produced using the new technology and consisting of 100 cells whose 'MEA' have been derived from 1 m² of membrane will be able to develop 3000 W since the whole membrane is used to produce electricity. In conclusion, as far as the manufacturing system is concerned, substantial time savings may be obtained both in the production of 'MEGA' and in the assembly of the stack itself. Furthermore, since the entire membrane is used for the production of electricity, the 'MEGA' also allows substantial savings in terms of materials (membrane).

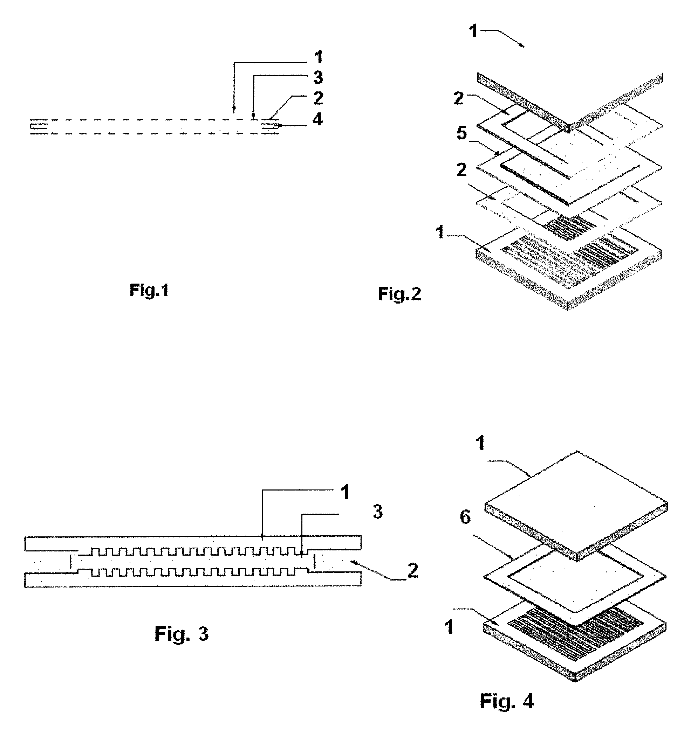

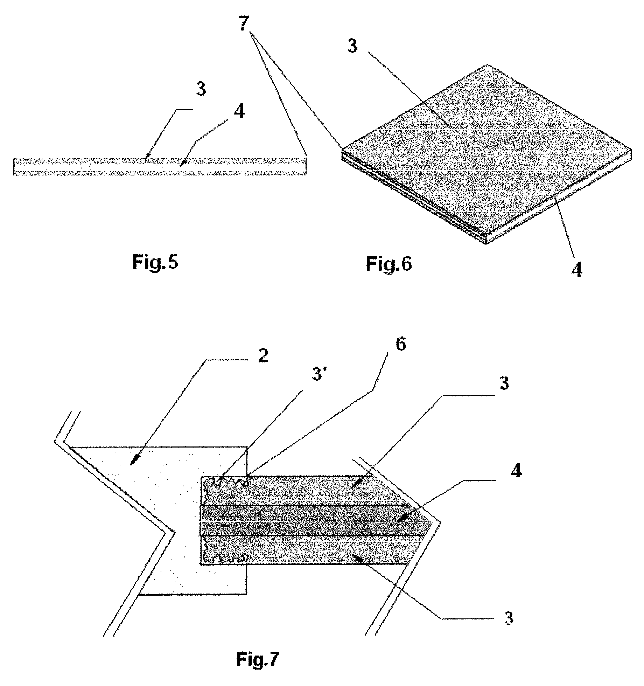

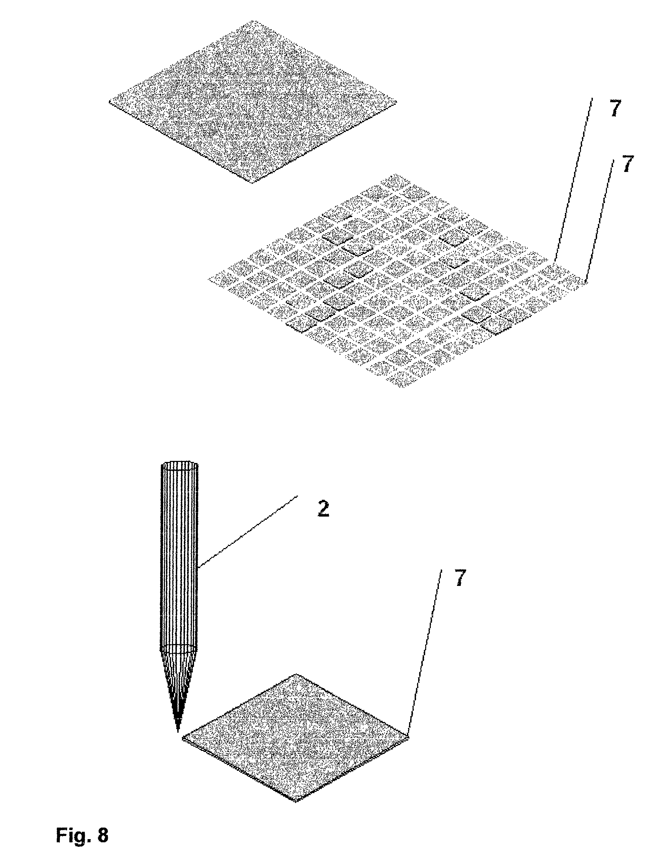

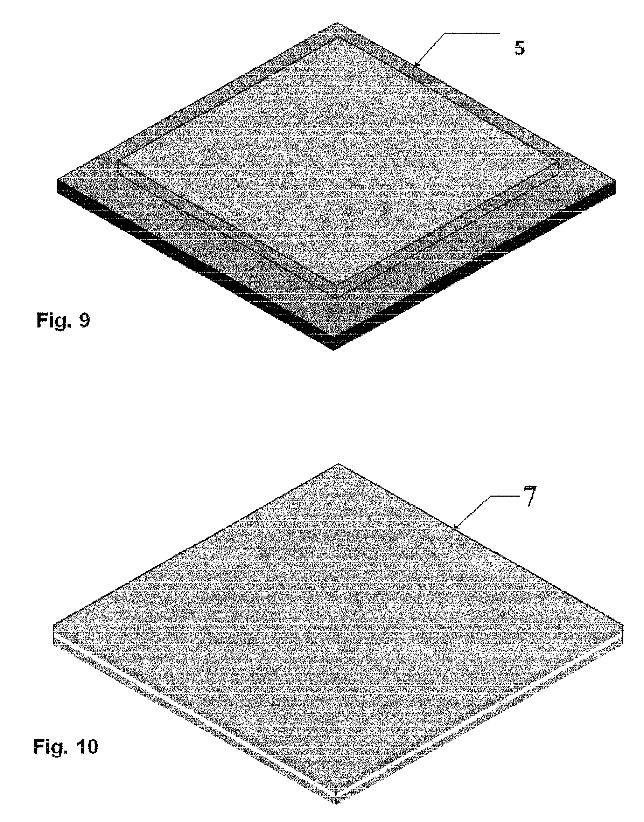

Finally, as the 'MEGA' can exploit the porosity of the electrodes to achieve a gas-tight seal, it proves to be of superior quality from the standpoint of impermeability. This and other characteristics will now be further clarified in reference to a simple form of execution of the invention; this example serves purely illustrative purposes and in no way limits the scope of this patent.
With reference to the annexed drawings, where:
Figs. 1, 2
   Show a cross-section and exploded view of a traditional cell.
Figs. 3,4
   Show a cross-section and exploded view of a cell with the 'MEGA' to which this patent pertains.
Figs. 5,6,7
   Show a cross-section, perspective view and enlarged section of the new 'MEGA' embedded in the gasket.
Fig. 8
   Shows the sequence of phases in the production of the 'MEGA' to which this patent pertains.
Figs. 9,10
   Show a traditional 'MEA' with overlapping membrane and the assembly used in the 'MEGA' that has been obtained by shearing, without the overlapping membrane.
In the annexed drawings, the number 1 represents the collectors, 2 the gaskets, 3 the electrodes, 4 the membrane, 5 the 'MEA', 6 the 'MEGA' and 7 the assembled component without the overlapping membrane. In fig. 7, 3' represents the porosities of the electrode; table 3 shows in sequence an assembly measuring 1 m², one hundred individual assemblies obtained by shearing, one of the hundred assemblies embedded in the gasket using a well-known injection process.
In actual fact the details of execution, dimensions, materials, form and similar aspects of the invention may vary while remaining within the domain of this industrial patent.
In fact, the invention thus conceived lends itself to numerous modifications and variations, all of which fall within the concept of this industrial patent. Moreover, all the elements may be replaced by other technically equivalent ones.

## Claims

1. " 'MEGA' COMPONENT FOR POLYMER ELECTROLYTE FUEL CELLS AND RELATIVE MANUFACTURING TECHNOLOGY"
comprising two electrodes (3) heat sealed onto a proton exchange membrane (4) and an insulating gasket (2), **characterised by** the fact that the assembled component (7), whose membrane does not overlap the sides, is embedded in the gasket (2) as a result of a process in which a gasket-forming material, duly injected, works its way in between the porosities (3') of the electrodes (3) so as to form a single component (6) called 'MEGA'.

2. " 'MEGA' COMPONENT FOR POLYMER ELECTROLYTE FUEL CELLS AND RELATIVE MANUFACTURING TECHNOLOGY"
as described in the previous claim, further **characterized by** the fact that the structural configuration of the 'MEGA' (6) allows a convenient manufacturing sequence, consisting in the production, firstly, of a large assembly that is thereafter mechanically split into several smaller-sized components (7); the latter will in turn be embedded in the gasket (2) by means of a well-known material injection process and remain inseparably bonded with the gasket itself (2), which forms the peripheral seal of each individual assembly; each assembly thus fashioned will be placed between the two collectors (1) to form one of the cells making up the stack.
